# EUROPEAN PATENT APPLICATION

(11) **EP 3 715 918 A1**
(43) Date of publication of application: **30.09.2020**
(21) Application number: 20166169.1
(22) Date of filing: 27.03.2020
(51) Int. Cl.: G02B 1/16, A47G 1/02, G06F 3/0488, G02B 7/18, H05B 3/84, F24F 11/30

(54) **MIRROR ELEMENT WITH "TOUCH-SCREEN" FUNCTION**

(30) Priority: 28.03.2019 IT 201900004665
(71) Applicant: Borgna Vetri S.r.l., 12020 San Defendente Cervasca (IT)
(72) Inventor: BORGNA, Enzo, 12100 Cuneo (IT)
(74) Representative: Torti, Carlo Maria Emilio

(57) **Abstract**

A mirror element (100) comprising a plate (101) of a substantially transparent material, wherein said plate (101) is shaped so as to define two main surfaces mutually opposite in the direction of the thickness of said plate (101), wherein said mirror element (100) comprises a reflective layer (102) of a predefined thickness deposited on a first surface (104) of said two main surfaces of said plate (101) and an opaque layer (106) deposited on the second surface (103) of said plate (101) opposite to said first surface (104).

## Description

### TECHNICAL FIELD OF THE INVENTION

The present invention belongs to the fields of mirror elements and interface elements, in particular, with a "touch-screen" function. In detail, the present invention relates to a mirror element with reflective properties, which incorporates a control terminal (an interface) of the touch-screen type, for example, but not exclusively, for managing the functions of a heating and/or conditioning system.

### BACKGROUND ART

The use, in particular, but not exclusively, in domestic environments, of control terminals or interfaces for managing systems and/or equipments is known.

For example, control or interface units for managing heating and/or conditioning systems are widely known.

In particular, latest generation control units usually comprise an interface of the touch-screen type by means of which the user sets the operating parameters of the system; for example, in the case of heating systems, by means of the interface, the user sets the switching on times of the thermal boiler (and/or the switching off of the boiler at night time), the minimum temperature of the water circulating in the system and/or the temperature desired in different environments (for example, lower in nighttime environments, such as bedrooms or the like, and higher in daytime environments such as living rooms, bathrooms and similar environments). The methods of managing a heating and/or conditioning system, which are substantially known, do not fall within the scope of the present invention and therefore a detailed description is omitted for the sake of conciseness.

Interface solutions of the known type, although being appreciable from different points of view, such as, for example, simplicity of use (especially in the case of an interface with graphic support), reliability, simplicity of construction and/or installation, have however drawbacks which the applicant intends to overcome, or at least reduce, by means of the present invention.

A typical drawback of the solutions of the known type, particularly felt in prestigious domestic (but also public) environments, is the one relating to the negative aesthetic impact thereof on the environments in which they are installed.

In fact, despite the increasingly smaller sizes, the interfaces of the known type still represent elements of discontinuity, and are often perceived as discordant with respect to the furniture if not in contrast with the furniture itself.

The solutions most commonly adopted to overcome, or at least minimize, the negative impact of the interface devices of the known type on the aesthetics of the target environments include those according to which the interface devices are installed in areas which are hardly visible and/or partially hidden if not confined inside or behind furniture elements, for example, inside lockers or the like.

However, said solutions have the drawback of making the interface devices more difficult to be reached, with evident problems, especially in panic conditions and/or when access to the interface is required in minimum times and/or for subjects not necessarily informed with regard to the actual location thereof.

It is therefore the main purpose of the present invention to overcome or at least minimize the issues summarized above and found in the devices and/or interface systems according to the background art.

In particular, it is a first object of the present invention to provide a solution which allows the practically perfect camouflage of an interface device of the known type, without at all compromising the accessibility and/or functionality thereof.

Furthermore, it is within the scope of the present invention to ensure the desired camouflage of an interface device of the known type, by using (with innovative modifications) a furnishing element of the known type and, furthermore, without compromising the original functionality of said furnishing element.

Furthermore, the solution according to the present invention shall be characterized by simplicity of construction (and therefore by low costs) and high adaptability, and therefore it shall be installable in different environments using furnishing elements perfectly compatible and/or integral therewith.

Furthermore, it is a further object of the present invention to propose a solution adapted to be installed in equally simple manners and at equally contained costs, as well as without requiring substantial modifications either of the destination environments or of the furnishing elements.

### DESCRIPTION OF THE PRESENT INVENTION

The present invention is based on the general consideration according to which it is possible to achieve the set purposes mentioned above, by integrating, in innovative manners, an interface device, in particular of the touch-screen type, in a furnishing element, for example, a mirror or a mirror element in general. In particular, according to a further consideration at the basis of the present invention, the mirror element is modified without compromising the functionality thereof and maintaining the original aesthetic appearance thereof, but in any case, so as to use the touch-screen interface through the mirror, and therefore managing the functionality of the system or equipment connected to the interface.

In practice, according to the present invention, a user will have available a mirror adapted to be installed in any environment and to be used in said environment both as a mirror and as an interface device.

Based on the above considerations, and with the purpose of overcoming the issues and/or drawbacks observed in the interface systems and/or devices according to the background art, according to a first embodiment, the present invention relates to a mirror element comprising a plate of a substantially transparent material, wherein said plate is shaped so as to define two main surfaces mutually opposite in the direction of the thickness of said plate, wherein said mirror element comprises a reflective layer of a predefined thickness deposited on a first surface of said two main surfaces of said plate and an opaque layer deposited on the second surface of said plate opposite to said first surface; wherein at at least one portion of said second surface, the thickness of said opaque layer is reduced with respect to the thickness of said opaque layer outside said at least one portion, wherein at said at least one portion, said layer is still at least partially opaque to the natural light and at least partially transparent to the light in a predefined frequencies spectrum, and wherein at said at least one portion, a control terminal of the touch-screen type is arranged, adapted to be connected to a circuitry which is manageable by means of said terminal, said terminal being therefore adapted to be activated and/or used by contacting or touching said mirror element at said at least one portion.

According to an embodiment, at said at least one portion the thickness of said opaque layer is between 20% and 50% of the thickness of said opaque layer outside said at least one portion.

According to an embodiment, at said at least one portion said opaque layer is at least partially transparent to LED light.

According to an embodiment, at said at least one portion said opaque layer is at least partially transparent to red LED light.

According to an embodiment, said opaque layer is made of glass frit.

According to an embodiment, said reflective layer is made of silver (Ag) or aluminum (Al) or both.

According to an embodiment, said reflective layer is made by electrolysis plating of silver (Ag) or aluminum (Al) or both.

According to an embodiment, said control terminal of the touch-screen type is adapted to be connected to said circuit by means of a Wi-Fi connection.

It is a further object of the present invention a system for managing an apparatus, said system comprising a management circuit for managing said apparatus, whereby said system comprises a mirror element according to one of the embodiments summarized above, and whereby said control terminal of the touch-screen type is connected to said management circuit.

According to an embodiment, said management circuit is adapted to manage the functions of a heating and/or conditioning system.

It is a further object of the present invention a method for the production of a mirror element according to an embodiment of the present invention, said method comprising:
the provision of a plate of a substantially transparent material, wherein said plate is shaped so as to define two main surfaces, mutually opposite, in the direction of the thickness of said plate, the formation of a reflective layer of a predefined thickness on a first surface of said two main surfaces of said plate;
**characterized in that** it comprises:
the formation on a second surface of said plate opposite to said first surface of an opaque layer;
the at least partial reduction of the thickness of said opaque layer at at least one portion of said second surface;
the provision, at said at least one portion, of a control terminal of the touch-screen type adapted to be connected to a circuit which is manageable by means of said terminal.

According to an embodiment, at said at least one portion, the thickness of said opaque layer is reduced until it reaches a thickness of between 20% and 50% of the thickness of said opaque layer outside said at least one portion.

According to an embodiment, at said at least one portion, the thickness of said opaque layer is reduced by means of a laser technology processing.

Further embodiments of the present invention are defined in the claims.

### BRIEF DESCRIPTION OF THE FIGURES

In the following, the present invention will be further clarified by means of the following detailed description of the possible embodiments depicted in the drawings, in which corresponding or equivalent features and/or component parts of the present invention are identified by the same reference numbers. It should however be noted that the present invention is not limited to the embodiments described below and depicted in the drawings; conversely, all those variations and/or modifications of the embodiments described below and depicted in the attached drawings, which will be apparent to those skilled in the art, fall within the scope of the present invention.

In the drawings:
- Figures 1 and 2 respectively show a front view and a rear view of a mirror element according to an embodiment of the present invention;
- Figures 3 and 4 respectively show an exploded view and a sectional view of a mirror element according to an embodiment of the present invention;
- Figures 5 and 6 show diagrammatic views of a management system according to an embodiment of the present invention.

### DETAILED DESCRIPTION OF THE PRESENT INVENTION

The present invention finds particular application in the field of equipment management, in particular for heating and/or conditioning systems, by means of an interface device of the touch-screen type, this being the reason why, in the following, the present invention will be described with particular reference to the applications thereof in the field of management of heating and/or conditioning systems, in particular by means of an interface device of the touch-screen type.

However, the possible applications of the present invention are not limited to those described below. Conversely, the present invention finds convenient application in all cases in which it is necessary to manage an apparatus by means of an interface device and to install said interface device in an environment while containing the impact of said interface device on the aesthetics of the said environment.

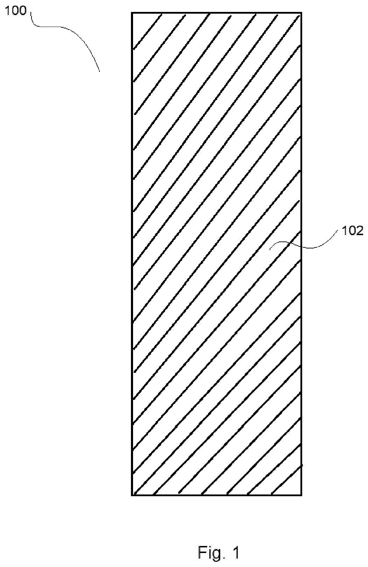

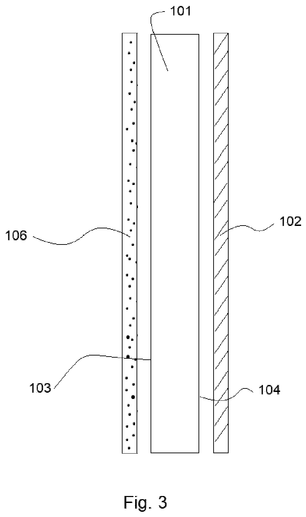

In Figures 1 to 4, the mirror element according to the embodiment of the present invention depicted therein is identified by reference numeral 100 and comprises a plate 101 made of transparent material (for example, glass, crystal but also synthetic transparent material), a layer of reflective material 102 and a layer of opaque material 106. The plate 101 is shaped so as to define two main surfaces, counterposed in the direction of the thickness of the plate 101, in particular, a surface 104 on which the layer 102 is applied, and a surface 103 on which the layer 106 is applied.

The layer 102, made of reflective material (for example, silver (Ag) or aluminum (Al) or both) is deposited on the surface 104 according to substantially known techniques (for example by means of electrolysis plating, and therefore not described in detail for synthesis purposes).

With regard to the layer 106, the same is usually made using a glass frit; in practice, the glass frit is deposited on the surface 103 of the plate 101, wherein the plate 101, comprising the layers 102 and 106, is subsequently subjected to baking in the oven, so as to obtain a perfect adhesion of the layers 102 and 106, respectively, to the surfaces 104 and 103, as well as the crystallization of the frit 106.

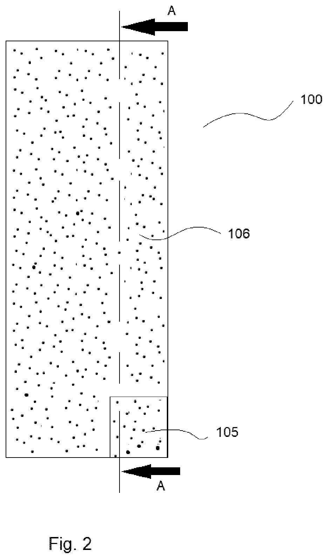

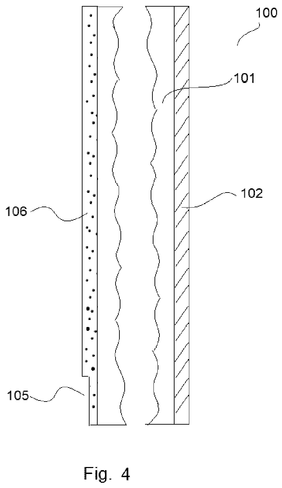

During a subsequent processing step, the frit layer 106 is subjected to a laser processing, wherein, by means of said processing, the thickness of the frit layer 106 is reduced at a portion 105 of the surface 103 (Figures 2 and 4). For example, at the end of said processing step, the thickness of the frit layer 106, in the portion 105, may be reduced until reaching a thickness from 20% to 50% of the original thickness (other than the portion 105), and therefore reducing the thickness of the original layer in a percentage from 80% to 50% respectively. It should be noted that, the original thickness of the frit layer 106 is in the order of microns, in particular, from 100 Microns to 1000 Microns, in particular, from 200 Microns to 500 Microns, depending on the needs and/or circumstances, in particular, depending on the intended use of the mirror element 100.

The processing step summarized above constitutes one of the peculiarities of the present invention.

In fact, before being subjected to a reduction in thickness at the portion 105, the frit layer 106 is substantially opaque to light in a practically complete frequency spectrum, and therefore, to light of any color, both natural and artificial.

Conversely, by reducing the thickness of the frit layer 106, the opacity features of the layer 106 at the portion 105 are modified, whereby, at the portion 105, the layer 106 (of reduced thickness with respect to the original one) is still opaque to natural light but at least partially transparent to light in a predefined spectrum of frequencies, in particular red light.

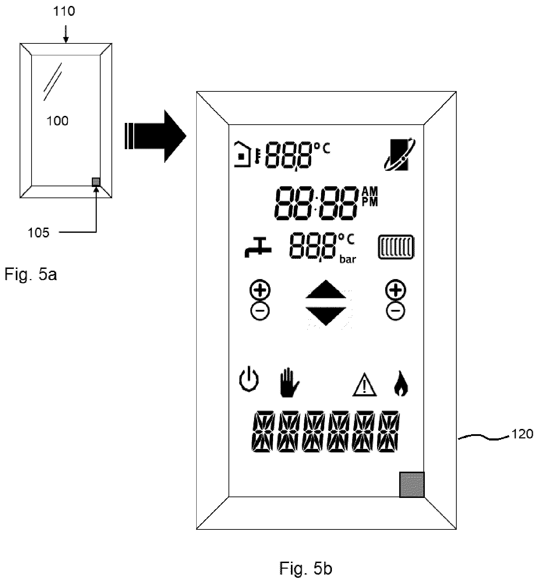

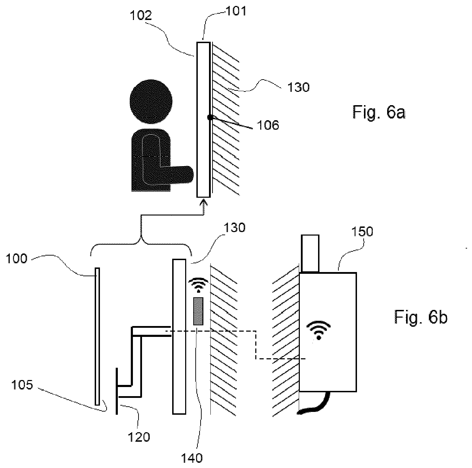

It is therefore clear that the portion 105, in the presence of only natural light, will be imperceptible to an observer or user placed in front of the mirror element 100 (in front of the layer 102, see the following description and Figures 5 and 6).

Furthermore, a possible light source (in a predefined frequency spectrum, for example, in a spectrum of frequencies comprising red and possibly adjacent to red) placed at the rear with respect to the element 100, and therefore on the opposite side with respect to the layer 102, will be: invisible to an observer placed in front of the element 100 (in front of the layer 102) if positioned at portions of the element 100 other than the portion 105; but visible to an observer placed in front of the element 100 (in front of the layer 102) if positioned at the portion 105.

Therefore, it clearly emerges from the foregoing that, for an observer of the mirror element 100, the mirror element itself is perceived as a substantially normal mirror, in particular, as anticipated, without perception of the portion 105 of the layer 106. However, an observer or user aware of an interface device positioned behind the element 100 and at the portion 105 is capable of using said interface device through the mirror element 100, and therefore to manage any equipment (for example, a heating and/or conditioning system) connected to said interface device. In fact, by contacting the layer 102 (if present, otherwise the plate 101) at the portion 105, said interface device, for example, of the touch-screen type, is activated with the consequent "switching on" and emission of light, for example red light, the light emitted being, although, perceivable by the user as it is transmitted through the semi-opaque layer 106 at the portion 105.

In summary, by means of a mirror element according to the present invention, an interface device of the touch-screen type arranged behind the element 100 at the portion 105, when switched off, is invisible to an observer placed in front of the element 100 as it is "hidden" from the residual opacity of the layer 106 at the portion 105.

Conversely, said interface device 100, when "switched on" is perfectly visible to said observer or user, in particular, being the configured icons and/or commands visible due to the light emitted by said interface device.

In the following, with reference to Figures 5 and 6, a description of a possible application of the mirror element 100 according to the present invention is given for the case of an interface device of the touch-screen type.

Figures 5 and 6 show a mirror element 100 of the type shown above, an interface device 120, a wall 130 of an environment, a boiler 150 of a heating system. As shown, the element 100 is fastened to the wall 130 by means of a support frame of the common type, whereby, behind the mirror element 100 (between the element 100 and the wall 130) the interface device 120 of the touch-screen type is arranged, in particular, at the portion 105 of the element 100.

In the particular (and non-limiting) case shown in Figures 5 and 6, the activation (switching on) of the device 120 by contacting the front surface of the element 100 (and therefore of the layer 102, if present), translates into the emission of light in a frequency spectrum predefined by the device 120, to configure a plurality of icons and/or commands (Figure 6b) each of said icons and/or said commands being activatable by contacting the front surface of the element 100.

Obviously, the surface dimension (area) of the portion 105 may be defined as a function of the surface dimension (area) of the device 120, and therefore of the number and/or the size of the said icons and/or commands.

Still as shown, a Wi-Fi "bridge" 140, arranged in the specific case behind the wall 130 (and therefore in an environment other than the one in which the element 100 and the device 120 are installed) is put in connection with the device 120 and with a Wi-Fi receiver of boiler 150, the operations and/or functions of the boiler 150 and/or of any other equipment (not shown) being therefore manageable (settable, adjustable, activatable etc.) by means of the device 120.

It has therefore been proven, by means of the previous detailed description of the embodiments of the present invention depicted in the drawings, that the present invention allows to obtain the desired results and to overcome or at least limit the drawbacks found in the background art.

In particular, by means of the present invention a solution is provided which allows an interface device to be camouflaged in a convenient manner, said interface device being however completely accessible and activatable by contacting the mirror element.

Furthermore, by means of the present invention, the desired camouflage of an interface device of the known type is ensured by using (with innovative modifications) a furnishing element of the known type and furthermore without compromising the original functionality of said furnishing element.

Furthermore, the solution according to the present invention is characterized by simplicity of construction (and therefore by low costs) and high adaptability, and is therefore installable in different environments using furnishing elements perfectly compatible and/or integral therewith.

Although the present invention has been previously clarified by means of the detailed description of the embodiments depicted in the drawings, the present invention is not limited to the embodiments described and depicted in the drawings; conversely, all those variants and/or modifications of the embodiments described and depicted in the accompanying drawings, which will be apparent to those skilled in the art, are within the scope of the present invention.

For example, according to a variant embodiment, the device 120 may be arranged at portions of the element 100 other than the portion 105, reserving the portion 105 for the arrangement of a portion of the device 120, for example, the "wake up" portion reserved for switching on the device.

The scope of protection of the present invention is therefore defined by the claims.

## Claims

1. A mirror element (100) comprising a plate (101) of a substantially transparent material, wherein said plate (101) is shaped so as to define two main surfaces mutually opposite in the direction of the thickness of said plate (101), wherein said mirror element (100) comprises a reflective layer (102) of a predefined thickness deposited on a first surface (104) of said two main surfaces of said plate (101) and an opaque layer (106) deposited on the second surface (103) of said plate (101) opposite to said first surface (104); **characterized in that,** at at least one portion (105) of said second surface (103), the thickness of said opaque layer (106) is reduced with respect to the thickness of said opaque layer (106) outside said at least one portion (105), **in that,** at said at least one portion (105), said layer (106) is still at least partially opaque to the natural light and at least partially transparent to the light in a predefined frequencies spectrum, **and in that,** at said at least one portion (105), a control terminal of the touch-screen type is arranged, adapted to be connected to a circuit which is manageable by means of said terminal, said terminal being therefore adapted to be activated and/or used by contacting said reflective layer (102) at said at least one portion (105).

2. An element (100) according to claim 1, **characterized in that,** at said at least one portion (105), the thickness of said opaque layer (106) is between 20% and 50% of the thickness of said opaque layer (106) outside said at least one portion (105).

3. An element (100) according to one of claims 1 to 2, **characterized in that,** at said at least one portion (105), said opaque layer (106) is at least partially transparent to the LED light.

4. An element (100) according to claim 3, **characterized in that,** at said at least one portion (105), said opaque layer (106) is at least partially transparent to the red LED light.

5. An element (100) according to one of claims 1 to 4, **characterized in that,** said opaque layer (106), is made of a glass frit.

6. An element (100) according to one of claims 1 to 5, **characterized in that** said reflective layer (102) is made of silver (Ag) or aluminum (Al) or both.

7. An element (100) according to claim 6, **characterized in that** said reflective layer (102) is made by electrolysis plating with silver (Ag) or aluminum (Al) or both.

8. An element (100) according to one of claims 1 to 7, **characterized in that** said control terminal of the touch-screen type is adapted to be connected to said circuit by means of a Wi-Fi connection.

9. A system for managing an apparatus, said system comprising a management circuit for managing said apparatus, **characterized in that** said system comprises a mirror element (100) according to one of claims 1 to 8, **and in that** said control terminal of the touch-screen type is connected to said management circuit.

10. A management system according to claim 9, **characterized in that** said management circuit is adapted to manage the functions of a heating and/or conditioning system.

11. A method for the production of a mirror element (100) according to one of claims 1 to 8, said system comprising:
the provision of a plate (101) of a substantially transparent material, wherein said plate (101) is shaped so as to define two main surfaces (103, 104), mutually opposite, in the direction of the thickness of said plate (101), the formation of a reflective layer (102) of a predefined thickness on a first surface (104) of said two main surfaces of said plate (101);
**characterized in that** it comprises:
the formation on the second surface (103) of said plate (101) opposite to said first surface of an opaque layer (106);
the at least partial reduction of the thickness of said opaque layer (106) at at least one portion (105) of said second surface (103);
the provision, at said at least one portion (105), of a control terminal of the touch-screen type adapted to be connected to a circuit which is manageable by means of said terminal.

12. A method according to claim 11, **characterized in that,** at said at least one portion (105), the thickness of said opaque layer (106) is reduced until it reaches a thickness of between 20% and 50% of the thickness of said opaque layer (106) outside said at least one portion (105).

13. A method according to one of claims 11 and 12, **characterized in that,** at said at least one portion (105), the thickness of said opaque layer (106) is reduced by means of a laser technology processing.
